# EUROPÄISCHE PATENTANMELDUNG

(11) **EP 4 682 414 A1**
(43) Veröffentlichungstag der Anmeldung: **21.01.2026**
(21) Anmeldenummer: 25189479.6
(22) Anmeldetag: 15.07.2025
(51) Int. Cl.: F16K 27/02, F16K 35/00

(54) **VENTILANTRIEB UND PROZESSVENTIL**

(30) Priorität: 19.07.2024 DE 102024120502
(71) Anmelder: GEMÜ Gebr. Müller Apparatebau GmbH & Co. Kommanditgesellschaft, 74653 Ingelfingen (DE)
(72) Erfinder: Wegert, Axel, 74196 Neuenstadt am Kocher (DE); Baumgärtner, Michael, 74677 Dörzbach (DE); Kühne, Holger, 97209 Veitshöchheim (DE)
(74) Vertreter: DREISS Patentanwälte PartG mbB

(57) **Zusammenfassung**

Es wird ein Ventilantrieb (4) für ein Prozessventil (2) beschrieben. Dieser umfasst ein Antriebsgehäuse (100) mit einer Öffnung (102), welche in einen Innenraum (104) des Antriebsgehäuses (100) führt, und einen die Öffnung (102) des Antriebsgehäuses (100) verschließenden Verschluss (200), wobei in einem Verriegelungszustand des Antriebgehäuses (100) und des Verschlusses (200) wenigstens ein Rasthaken (206a-d) des Verschlusses (200) mit wenigstens einer Aussparung (106a-d) des Antriebsgehäuses (100) in Eingriff steht, und wobei zu einer Entriegelung des Antriebsgehäuses (100) und des Verschlusses (200) der wenigstens eine Rasthaken (206a-d) sich durch eine um eine gedachte Stellachse (S) erfolgende, relative Drehbewegung zwischen dem Antriebsgehäuse (100) und dem Verschluss (200) aus der Aussparung (106a-d) des Antriebsgehäuses (100) herausbewegt.

## Beschreibung

Die Erfindung betrifft einen Ventilantrieb und ein Prozessventil.

Die Probleme des Standes der Technik werden durch einen Ventilantrieb gemäß dem Anspruch 1 und durch ein Prozessventil gemäß einem nebengeordneten Anspruch gelöst.

Ein erster Aspekt der Beschreibung betrifft ein Ventilantrieb für ein Prozessventil, der Ventilantrieb umfasst ein Antriebsgehäuse mit einer Öffnung, welche in einen Innenraum des Antriebsgehäuses führt, und einen die Öffnung des Antriebsgehäuses verschließenden Verschluss, wobei in einem Verriegelungszustand des Antriebgehäuses und des Verschlusses wenigstens ein Rasthaken des Verschlusses mit wenigstens einer Aussparung des Antriebsgehäuses in Eingriff steht, und wobei zu einer Entriegelung des Antriebsgehäuses und des Verschlusses der wenigstens eine Rasthaken sich durch eine um eine gedachte Stellachse des Ventilantriebs erfolgende, relative Drehbewegung zwischen dem Antriebsgehäuse und dem Verschluss aus der Aussparung des Antriebsgehäuses herausbewegt.

Die Montagesicherheit wird durch den bereitgestellten Ventilantrieb bei reduziertem Aufwand erhöht. Ein versehentliches Öffnen wird durch die erforderliche Drehbewegung abgesichert.

Zudem verbessert sich die Befundung, Reparaturfähigkeit und Recyclingfähigkeit des Ventilantriebs, da der Verschluss einfach in dem entriegelten Zustand überführt werden kann. Nach der einfachen Entfernung des Verschlusses können die Komponenten aus dem Innenraum des Ventilantriebs entnommen und ggf. getauscht werden. Damit verbessert sich die Umweltbilanz des Ventilantriebs.

Ein vorteilhaftes Beispiel zeichnet sich dadurch aus, dass wenigstens ein als Vorsprung ausgebildetes Siegel von dem Verschluss abragt, wobei das wenigstens eine Siegel bei der relativen Drehbewegung zwischen dem Antriebsgehäuse und Verschluss zur Entriegelung durch wenigstens einen Siegelbrecher des Antriebsgehäuses zumindest abschnittsweise zerstört wird.

Vorteilhaft ist so eindeutig erkennbar, ob der Ventilantrieb bereits geöffnet wurde, bevor er zur geplanten Inspektion gelangt. Vorteilhaft lassen sich so Garantiefälle besser nachvollziehen.

Ein vorteilhaftes Beispiel zeichnet sich dadurch aus, dass das wenigstens eine Siegel in dem Verriegelungszustand in eine Ausnehmung des Antriebsgehäuses eingreift, wobei der wenigstens eine Siegelbrecher eine Wandung der Ausnehmung ist.

Vorteilhaft wird damit eine konstruktiv einfache Möglichkeit bereitgestellt, eine Siegelfunktion bereitzustellen.

Ein vorteilhaftes Beispiel zeichnet sich dadurch aus, dass zum Verriegeln des Antriebsgehäuses und des Verschlusses eine relative Axialbewegung, insbesondere parallel zu der Stellachse des Ventilantriebs, zwischen dem Antriebsgehäuse und dem Verschluss erfolgt.

Mit der Axialbewegung können auf einfache Art und Weise durch den Verschluss die innerhalb des Innenraums angeordneten Komponenten verliersicher in Ihrer Funktionsposition festgelegt werden.

Ein vorteilhaftes Beispiel zeichnet sich dadurch aus, dass ein Kopf des wenigstens einen Rasthakens zum Verriegeln über eine zugeordnete Einführfläche des Ventilgehäuses geführt und dabei zunächst in Richtung einer gedachten Stellachse des Ventilantriebs gedrückt wird, um anschließend bei Erreichen der wenigstens einen Aussparung in die wenigstens eine Aussparung einzufahren und einzugreifen.

Durch das Eingreifen des Kopfes in die Aussparung wird eine ausziehsichere Verriegelungsposition zwischen dem Antriebsgehäuse und dem Verschluss erreicht. Damit kann der Kopf des Rasthakens zerstörungsfrei nur durch die Drehbewegung aus der Aussparung entfernt werden.

Vorteilhaft kann der wenigstens eine federnde Rasthaken, nachdem er nach innen gedrückt wurde, durch die eigene Federkraft in die Aussparung hineingedrückt werden, um die Verriegelungsposition zu erreichen.

Ein vorteilhaftes Beispiel zeichnet sich dadurch aus, dass zum Entriegeln wenigstens eine Entriegelungsfläche des wenigstens einen Rasthakens und eine zugeordnete Gegenfläche der wenigstens einen Aussparung bei der relativen Drehbewegung zusammenwirken, um den wenigstens einen Rasthaken aus der zugeordneten Aussparung auf eine Umgebungsfläche des Ventilgehäuses zu führen, welche die zugeordnete Aussparung begrenzt.

Der federnde Rasthaken wird damit zerstörungsfrei aus der Aussparung herausbewegt, womit der Rasthaken seine Rastwirkung verliert und der Verschluss von dem Antriebsgehäuse abgezogen werden kann.

Ein vorteilhaftes Beispiel zeichnet sich dadurch aus, dass nach der relativen Drehbewegung von Antriebsgehäuse und Verschluss zueinander der wenigstens eine Rasthaken durch eine relative axiale Bewegung des Antriebsgehäuses und des Verschlusses voneinander entfernt werden.

Die Entfernung der Rasthaken aus der Aussparung durch die Radialbewegung ermöglicht erst die anschließende Abziehbewegung des Verschlusses vom Antriebsgehäuse.

Ein vorteilhaftes Beispiel zeichnet sich dadurch aus, dass bei der relativen axialen Bewegung des Antriebsgehäuses und des Verschlusses der wenigstens eine Rasthaken von der die Aussparung begrenzenden Umgebungsfläche über eine Kontaktierung einer Abziehfläche aus dem Innenraum des Antriebsgehäuses heraus bewegt wird.

Damit ist eine einfache Entfernung des Verschlusses möglich.

Ein vorteilhaftes Beispiel zeichnet sich dadurch aus, dass der Verschluss wenigstens eine Durchgangsöffnung umfasst, durch welche eine Antriebsstange des Ventilantriebs hindurchführt.

Vorteilhaft ist der Verschluss damit an der Ventilkörper-seitigen Öffnung des Antriebsgehäuses angeordnet, was vorteilhaft Konstruktions-Freiheitsgrade auf der von dem Ventilkörper abgewandten Seite ergibt.

Ein vorteilhaftes Beispiel zeichnet sich dadurch aus, dass der Ventilantrieb einen entlang der Stellachse bewegbaren, mit der Antriebsstange fest verbundenen Pneumatikkolben und eine Druckfeder, welche sich an dem Pneumatikkolben und am Antriebsgehäuse abstützt, umfasst.

Ein vorteilhaftes Beispiel zeichnet sich dadurch aus, dass der Ventilantrieb einen entlang der Stellachse bewegbaren, mit der Antriebsstange fest verbundenen Pneumatikkolben und eine Druckfeder, welche sich am Pneumatikkolben und am Verschluss abstützt, umfasst.

Ein vorteilhaftes Beispiel zeichnet sich dadurch aus, dass der Verschluss einen Verspannabschnitt umfasst, um einen lateralen Außenbund einer Ventilmembran zwischen dem Verspannabschnitt und einem Ventilkörper zu verspannen.

Ein vorteilhaftes Beispiel zeichnet sich dadurch aus, dass in einem Verriegelungszustand des Antriebgehäuses und des Verschlusses eine Mehrzahl von Rasthaken des Verschlusses jeweils mit einem zugeordneten einer Mehrzahl von Aussparungen des Antriebsgehäuses in Eingriff stehen, wobei zu der Entriegelung des Antriebsgehäuses und des Verschlusses die Mehrzahl von Rasthaken sich durch eine relative Drehbewegung zwischen dem Antriebsgehäuse und dem Verschluss aus den zugeordneten der Mehrzahl von Aussparungen des Antriebsgehäuses herausbewegen.

Ein zweiter Aspekt der Beschreibung betrifft ein Prozessventil insbesondere ein Membranventil, umfassend den Ventilantrieb gemäß dem ersten Aspekt und einen mit dem Ventilantrieb starr verbundenen Ventilkörper.

Ein vorteilhaftes Beispiel zeichnet sich dadurch aus, dass zwischen dem Ventilantrieb und dem Ventilkörper eine Ventilmembran mit ihrem lateralen Außenbund verspannt ist, wobei die Ventilmembran zu deren Bewegung mit der Antriebsstange verbunden ist.

In der Zeichnung zeigen:
- Fig. 1: ein Prozessventil in einem Schnitt entlang einer Stellachse;
- Fig. 2: das Prozessventil in einem Detail;
- Fig. 3: das Prozessventil in einem Schnitt lotrecht zur Stellachse; und
- Fig. 4: einen Verschluss des Ventilantriebs.

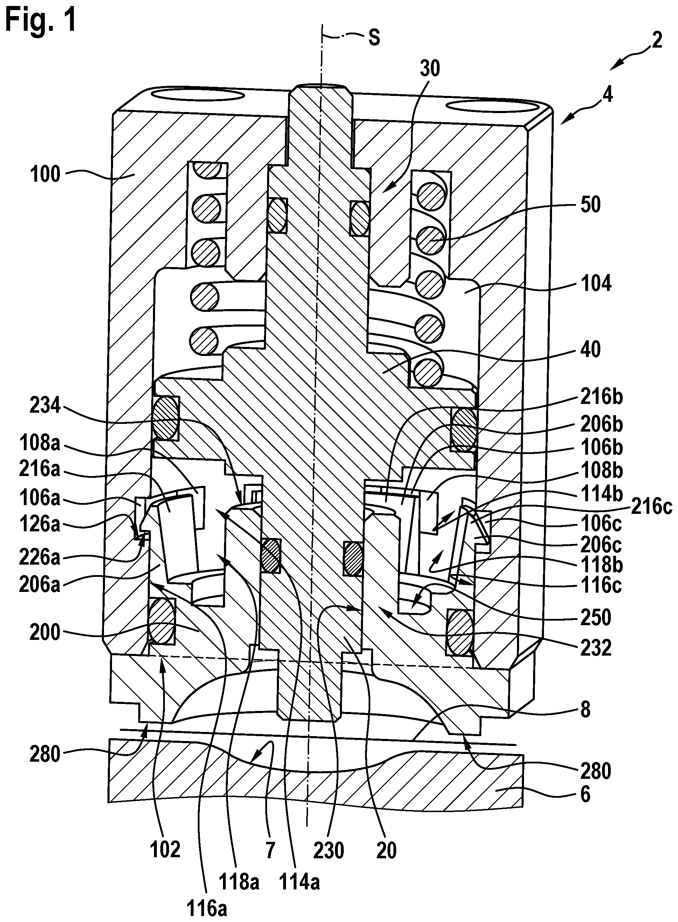

Figur 1 zeigt einen Ventilantrieb 4 für ein Prozessventil 2. Der Ventilantrieb 4 umfasst ein Antriebsgehäuse 100 mit einer Öffnung 102, welche in einen Innenraum 104 des Antriebsgehäuses 100 führt, und einen die Öffnung 102 des Antriebsgehäuses 100 verschließenden Verschluss 200.

In einem Verriegelungszustand des Antriebgehäuses 100 und des Verschlusses 200 steht wenigstens ein Rasthaken 206a-d des Verschlusses 200 mit wenigstens einer Aussparung 106a-d des Antriebsgehäuses 100 in Eingriff.

Zum Verriegeln des Antriebsgehäuses 100 und des Verschlusses 200 in der Fertigung erfolgt eine relative Axialbewegung, insbesondere parallel zu einer gedachten Stellachse S des Ventilantriebs 4, zwischen dem Antriebsgehäuse 100 und dem Verschluss 200.

Ein Kopf 216a-d des wenigstens einen Rasthakens 206a-d wird zum Verriegeln über eine zugeordnete Einführfläche 116a-d im Innenraum 104 des Antriebsgehäuses 100 geführt und dabei zunächst, also bei dem Einführen in den Innenraum 104 in Richtung der gedachten Stellachse S des Ventilantriebs 4 gedrückt. Beim anschließenden Erreichen der wenigstens einen Aussparung 106a-d fährt der Kopf 216a-d aufgrund der Federkraft des zugeordneten Rasthakens 206a-d in die wenigstens eine Aussparung 106a-d ein und greift damit in die wenigstens eine zugeordnete Aussparung 106a-d ein.

Die Einführfläche 116a-d des Abtriebsgehäuses 100 wird beim Einbringen des Verschlusses 200 von dem wenigstens einen Rasthaken 206a-d kontaktiert. Dabei wird der Kopf 216a-d des Rasthakens 206a-d bei weiterem Führen des Verschlusses 200 in die Öffnung, die zu dem Innenraums 104 führt weiter in Richtung der Stellachse S gedrückt. In dem nach innen gedrückten Zustand wird der Rasthaken 206a-d weiter in den Innenraum 104 hineingeführt. Der jeweilige Kopf 216a-d schnappt bei Erreichen der zugeordneten Aussparung 106a-d in diese ein.

In dem verriegelten Zustand verhindert eine Verriegelungsfläche 226a-d des wenigstens einen Rasthakens 206a-d gemeinsam mit einer Gegenverriegelungsfläche 126a-d der zugeordneten Aussparung 106a-d, dass der Verschluss 200 von dem Antriebsgehäuse 100 durch eine Axialbewegung entfernt werden kann.

Die Verriegelungsfläche 226a-d und die Gegenverriegelungsfläche 126a-d verlaufen lotrecht zur Stellachse S.

In dem verriegelten Zustand wird der Ventilantrieb 4 ausgeliefert.

Zu einer Befundung des Ventilantriebs 4 wird dieser in den entriegelten Zustand überführt und der Verschluss 200 von dem Antriebsgehäuse 100 entfernt.

Zu der Entriegelung des Antriebsgehäuses 100 und des Verschlusses 200 wird der wenigstens eine Rasthaken 206a-d durch eine um die gedachte Stellachse S erfolgende, relative Drehbewegung zwischen dem Antriebsgehäuse 100 und dem Verschluss 200 aus der Aussparung 106a-d des Antriebsgehäuses 100 herausbewegt.

Im Betrieb des Prozessventils 2 wird die relative Drehbewegung dadurch verhindert, dass nicht gezeigt Befestigungsmittel, insbesondere Bolzen oder Schrauben, sowohl durch das Antriebsgehäuse 100 als auch durch den Verschluss 200 führen, um den Ventilantrieb 4 an einem Ventilkörper 6 zu befestigen. Das Antriebsgehäuse 100 und der Verschluss 200 sind im Betrieb also nicht gegeneinander verdrehbar.

Bei der relativen axialen Bewegung des Antriebsgehäuses 100 und des Verschlusses 200 wird zum Entfernen des Verschlusses 200 der wenigstens eine Rasthaken 206a-d von der die Aussparung 106a-d begrenzenden Umgebungsfläche 114a-d über eine Kontaktierung einer Abziehfläche 118a-d aus dem Innenraum 104 des Antriebsgehäuses 100 heraus bewegt.

Der Verschluss 200 umfasst wenigstens eine Durchgangsöffnung 230, durch welche eine Antriebsstange 20 des Ventilantriebs 4 hindurchführt.

Das Antriebsgehäuse 100 umfasst wenigstens einen ersten Führungsabschnitt 30 zur axialen Führung der Antriebsstange 20 des Ventilantriebs 4, wobei der Verschluss 200 wenigstens einen zweiten Führungsabschnitt 232 zur axialen Führung der Antriebsstange 20 des Ventilantriebs 4 umfasst. Der Verschluss dient damit im Betrieb auch zur Führung der Antriebsstange 20.

Die Antriebsstange 20 wird in einem Betrieb des Prozessventils 2 entlang der Stellachse S bewegt.

Der Verschluss 200 ist in wenigstens einer gedachten Lotebene der Stellachse S formschlüssig im Antriebsgehäuse 100 aufgenommen. Dafür sorgen beispielsweise Außenflächen der Rasthaken 206a-c, welche im verriegelten Zustand an den zugeordneten Flächen 116a-d anliegen.

In Figur 1 ist der Ventilantrieb 4 für ein normal-geschlossenes Prozessventil gezeigt. Der Ventilantrieb 4 umfasst einen entlang der Stellachse S bewegbaren, mit der Antriebsstange 20 fest verbundenen Pneumatikkolben 40 und eine Druckfeder 50, welche sich an dem Pneumatikkolben 40 und am Antriebsgehäuse 100 abstützt.

In einem nicht gezeigten Beispiel für ein normal-geöffnetes Prozessventil umfasst der Ventilantrieb 4 einen entlang der Stellachse S bewegbaren, mit der Antriebsstange fest verbundenen Pneumatikkolben und eine Druckfeder, welche sich am Pneumatikkolben und am Verschluss 200 abstützt.

Eine kreisringförmige Aufnahmenut 250 des Verschlusses 200 ist dazu vorgesehen, dass die Druckfeder des Ventilantriebs 4 in die Aufnahmenut 250 eingreift.

Ein im Innenraum 104 angeordneter Anschlag 234 des Verschlusses 200 stellt eine Anschlagfläche bereit, damit die in dem Innenraum 104 angeordneten Komponenten, ggf. mit einer Federkraft entlang der Stellachse S beaufschlagt, an dem Verschluss 200 anliegen können.

Der Verschluss 200 ist über den wenigstens einen Rasthaken 206a-d zum Antriebsgehäuse 100 auszugsicher entlang der Stellachse S festgelegt. Damit hält der Verschluss 200 die im Innenraum 104 angeordneten Komponenten.

Es ist im gezeigten Beispiel vorgesehen, dass der Verschluss 200 einen Verspannabschnitt 280 umfasst, um einen lateralen Außenbund einer Ventilmembran 8 zwischen dem Verspannabschnitt 280 und einem Ventilkörper 6 zu verspannen.

In einem Verriegelungszustand des Antriebgehäuses 100 und des Verschlusses 200 stehen eine Mehrzahl von Rasthaken 206a-d des Verschlusses 200 jeweils mit einem zugeordneten einer Mehrzahl von Aussparungen 106a-d des Antriebsgehäuses 100 in Eingriff, wobei zu der Entriegelung des Antriebsgehäuses 100 und des Verschlusses 200 die Mehrzahl von Rasthaken 206a-d sich durch eine relative Drehbewegung zwischen dem Antriebsgehäuse 100 und dem Verschluss 200 aus den zugeordneten der Mehrzahl von Aussparungen 106a-d des Antriebsgehäuses 100 herausbewegen.

Im gezeigten Beispiel liegen sich jeweils zwei von vier Rasthaken 206a-d paarweise gegenüber. Zwei von vier Aussparungen 106a-d liegen sich paarweise gegenüber.

Das Prozessventil 2 ist beispielsweise als Membranventil ausgebildet. Selbstverständlich können auch andere Prozessventilarten wie Sitzventile zum Einsatz kommen.

Das Prozessventil 2 umfasst den Ventilantrieb 4 und den mit dem Ventilantrieb 4 starr verbundenen Ventilkörper 6.

In dem Beispiel des Membranventils ist zwischen dem Ventilantrieb 4 und dem Ventilkörper 6 eine Ventilmembran 8 mit ihrem lateralen Außenbund verspannt, wobei die Ventilmembran 8 zu deren Bewegung mit der Antriebsstange 20 verbunden ist.

Über die Antriebsstange 8 und ein nicht gezeigtes Druckstück wird die Ventilmembran 8 zum Verschließen eines Durchflusskanals des Prozessventils 2 auf einen Ventilsitz 7 des Ventilkörpers 6 gedrückt. Um den Durchflusskanal zu öffnen wird die Ventilmembran 8 mittels der Antriebsstange 20 von dem Ventilsitz 7 abgehoben.

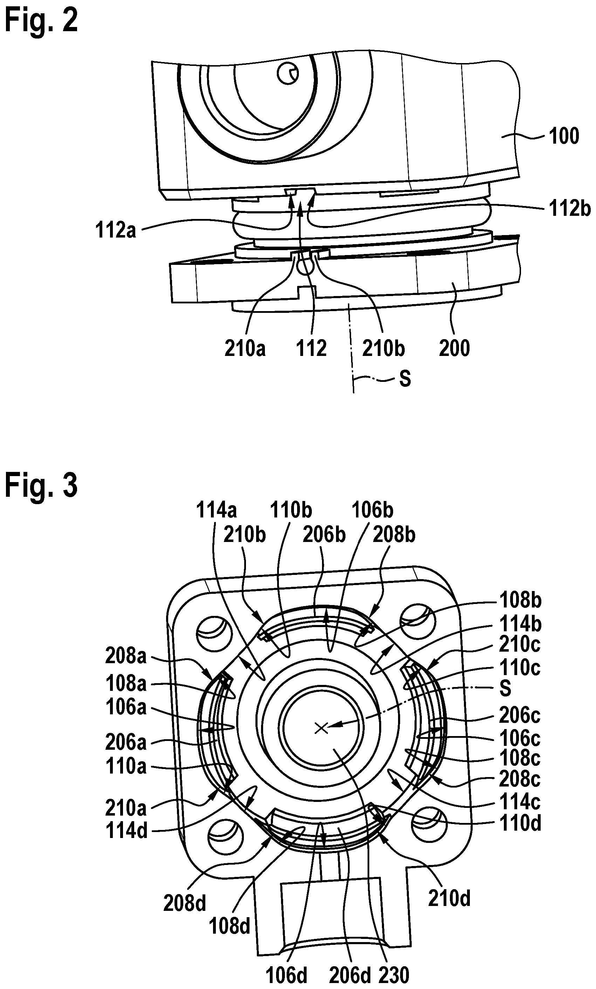

Figur 2 zeigt ein Detail des Ventilantriebs 4 in einem noch nicht verriegelten Zustand. Wenigstens ein als Vorsprung ausgebildetes Siegel 210a-b ragt von dem Verschluss 200 ab. Das wenigstens eine Siegel 210a-b wird bei der relativen Drehbewegung zwischen dem Antriebsgehäuse 100 und Verschluss 200 zur Entriegelung durch wenigstens einen Siegelbrecher 112a-b des Antriebsgehäuses 100 zumindest abschnittsweise zerstört.

Im Beispiel ragt das wenigstens eine Siegel 210a-b parallel zur Stellachse S vom Verschluss 200 ab.

Das wenigstens eine Siegel 210a-b greift in dem Verriegelungszustand in eine Ausnehmung 112 des Antriebsgehäuses 100 ein. Der wenigstens eine Siegelbrecher 112a-b ist eine Wandung der Ausnehmung 112.

Um den Verschluss 200 nach der Verriegelung von dem Antriebsgehäuse 100 zu entfernen, ist es erforderlich, die beiden Komponenten gegeneinander zu rotieren. Dadurch wird das in der Ausnehmung 112 befindliche wenigstens eine Siegel 210a-b zerstört.

Die Ausnehmung 112 schließt sich an die Außenfläche des Antriebsgehäuses 100 an, wodurch sowohl ein Siegelbruch als auch ein intaktes Siegel 210a-b von außen sichtbar sind.

Nach der relativen Drehbewegung von Antriebsgehäuse 100 und Verschluss 200 zueinander wird der wenigstens eine Rasthaken 206a-d durch eine relative axiale Bewegung des Antriebsgehäuses 100 und des Verschlusses 200 voneinander entfernt.

Figur 3 zeigt den Ventilantrieb 4 in einem Schnitt lotrecht zur Stellachse in einem verriegelten Zustand. Hier stehen die Rasthaken 206a-d in Eingriff mit den zugeordneten Aussparungen 106a-d.

Es ist vorgesehen, dass zum Entriegeln wenigstens eine Entriegelungsfläche 208a-d, 210a-d des Kopfes 216a-d des wenigstens einen Rasthakens 206a-d und eine zugeordnete Gegenfläche 108a-d, 110a-d der wenigstens einen Aussparung 106a-d bei der relativen Drehbewegung derart zusammenwirken, um den wenigstens einen Rasthaken 206a-d aus der zugeordneten Aussparung 106a-d auf eine Umgebungsfläche 114a-d des Antriebsgehäuses 100 zu führen, welche die zugeordnete Aussparung 106a-d begrenzt.

Die wenigstens eine Entriegelungsfläche 208a-d, 210a-d des Kopfes 216a-d verläuft abweichend von einem in Umfangsrichtung gedachten Kreis mit Mittelpunkt auf der gedachten Stellachse S.

Eine Form und Anordnung der wenigstens einen Entriegelungsfläche 208a-d, 210a-d, eine Form und Anordnung der zugeordneten wenigstens einen Gegenfläche 108a-d, 110a-d und die Rückstellkraft des Rasthakens 206a-d bestimmen maßgeblich die Kraft, die überschritten werden muss, um den wenigstens einen Rasthaken 206a-d aus der Aussparung 106a-d durch die relative Drehbewegung herauszubewegen. Bei einer Mehrzahl von Rasthaken 206a-d ergibt sich eine entsprechend zusammenwirkende Kraft.

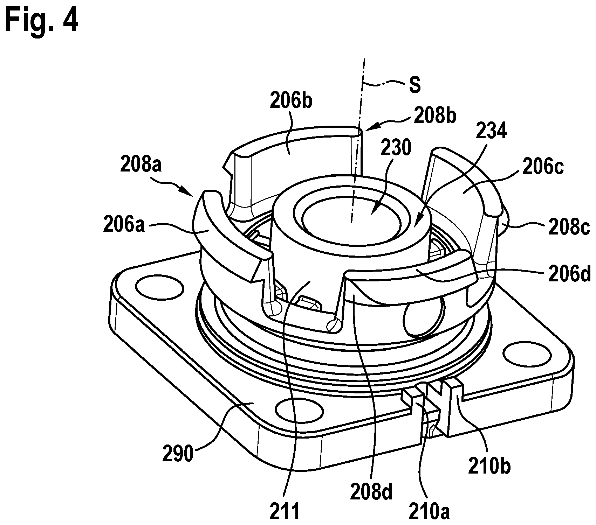

Figur 4 zeigt ein Beispiel des Verschlusses 200 in einer perspektivischen Ansicht mit nicht gebrochenem Siegel 210a-b. Der Verschluss 200 weist einen Flanschbereich 290 mit einem Lochbild auf. Das wenigstens eine Siegel 210a-b ragt von dem Flanschbereich 290 ab.

Die Rasthaken 206a-d folgen einem gedachten Kreis mit Mittelpunkt auf der Stellachse S.

Innerhalb der Rasthaken 206a-d befindet sich eine Hülse 211, welche zumindest einen Teil der Durchgangsöffnung 230 bereitstellt.

## Patentansprüche

1. Ein Ventilantrieb (4) für ein Prozessventil (2) umfassend: ein Antriebsgehäuse (100) mit einer Ventilkörper-seitigen Öffnung (102), welche in einen Innenraum (104) des Antriebsgehäuses (100) führt, und einen die Ventilkörper-seitige Öffnung (102) des Antriebsgehäuses (100) verschließenden Verschluss (200), wobei in einem Verriegelungszustand des Antriebgehäuses (100) und des Verschlusses (200) wenigstens ein Rasthaken (206a-d) des Verschlusses (200) mit wenigstens einer Aussparung (106a-d) des Antriebsgehäuses (100) in Eingriff steht, und wobei zu einer Entriegelung des Antriebsgehäuses (100) und des Verschlusses (200) der wenigstens eine Rasthaken (206a-d) sich durch eine um eine gedachte Stellachse (S) des Ventilantriebs (4) erfolgende, relative Drehbewegung zwischen dem Antriebsgehäuse (100) und dem Verschluss (200) aus der Aussparung (106a-d) des Antriebsgehäuses (100) herausbewegt.

2. Der Ventilantrieb (4) gemäß dem Anspruch 1, wobei wenigstens ein als Vorsprung ausgebildetes Siegel (210a-b) von dem Verschluss (200) abragt, und wobei das wenigstens eine Siegel (210a-b) bei der relativen Drehbewegung zwischen dem Antriebsgehäuse (100) und Verschluss (200) zur Entriegelung durch wenigstens einen Siegelbrecher (112a-b) des Antriebsgehäuses (100) zumindest abschnittsweise zerstört wird.

3. Der Ventilantrieb (4) gemäß dem Anspruch 2, wobei das wenigstens eine Siegel (210a-b) in dem Verriegelungszustand in eine Ausnehmung (112) des Antriebsgehäuses (100) eingreift, und wobei der wenigstens eine Siegelbrecher (112ab) eine Wandung der Ausnehmung (112) ist.

4. Der Ventilantrieb (4) gemäß Anspruch 1 oder 2, wobei zum Verriegeln des Antriebsgehäuses (100) und des Verschlusses (200) eine relative Axialbewegung, insbesondere parallel zu der Stellachse (S), des Ventilantriebs (4), zwischen dem Antriebsgehäuse (100) und dem Verschluss (200) erfolgt.

5. Der Ventilantrieb (4) gemäß einem der vorigen Ansprüche, wobei ein Kopf (216a-d) des wenigstens einen Rasthakens (206a-d) zum Verriegeln über eine zugeordnete Einführfläche (116a-d) des Antriebsgehäuses (100) geführt und dabei zunächst in Richtung der gedachten Stellachse (S) des Ventilantriebs (4) gedrückt wird, um anschließend bei Erreichen der wenigstens einen Aussparung (106a-d) in die wenigstens eine Aussparung (106a-d) einzufahren und einzugreifen.

6. Der Ventilantrieb (4) gemäß einem der vorigen Ansprüche, wobei zum Entriegeln wenigstens eine Entriegelungsfläche (208a-d, 210a-d)des wenigstens einen Rasthakens (206a-d) und eine zugeordnete Gegenfläche (108a-d, 110a-d) der wenigstens einen Aussparung (106a-d) bei der relativen Drehbewegung zusammenwirken, um den wenigstens einen Rasthaken (206a-d) aus der zugeordneten Aussparung (106a-d) auf eine Umgebungsfläche (114a-d) des Antriebsgehäuses (100) zu führen, welche die zugeordnete Aussparung (106a-d) begrenzt.

7. Der Ventilantrieb (4) gemäß einem der vorigen Ansprüche, wobei nach der relativen Drehbewegung von Antriebsgehäuse (100) und Verschluss (200) zueinander der wenigstens eine Rasthaken (206a-d) durch eine relative axiale Bewegung des Antriebsgehäuses (100) und des Verschlusses (200) voneinander entfernt werden.

8. Der Ventilantrieb (4) gemäß dem Anspruch 6 und 7, wobei bei der relativen axialen Bewegung des Antriebsgehäuses (100) und des Verschlusses (200) der wenigstens eine Rasthaken (206a-d) von der die Aussparung (106a-d) begrenzenden Umgebungsfläche (114a-d) über eine Kontaktierung einer Abziehfläche (118a-d) aus dem Innenraum (104) des Antriebsgehäuses (100) heraus bewegt wird.

9. Der Ventilantrieb (4) gemäß einem der vorigen Ansprüche, wobei der Verschluss (200) wenigstens eine Durchgangsöffnung (230) umfasst, durch welche eine Antriebsstange (20) des Ventilantriebs (4) hindurchführt.

10. Der Ventilantrieb (4) gemäß einem der vorigen Ansprüche, wobei der Ventilantrieb (4) einen entlang der Stellachse (S) bewegbaren, mit der Antriebsstange (20) fest verbundenen Pneumatikkolben (40) und eine Druckfeder (50), welche sich an dem Pneumatikkolben (40) und am Antriebsgehäuse (100) abstützt, umfasst.

11. Der Ventilantrieb (4) gemäß einem der Ansprüche 1 bis 9, wobei der Ventilantrieb (4) einen entlang der Stellachse (S) bewegbaren, mit der Antriebsstange (20) fest verbundenen Pneumatikkolben (40) und eine Druckfeder, welche sich am Pneumatikkolben (40) und am Verschluss (200) abstützt, umfasst.

12. Der Ventilantrieb (4) gemäß einem der vorigen Ansprüche, wobei der Verschluss (200) einen Verspannabschnitt (280) umfasst, um einen lateralen Außenbund einer Ventilmembran (8) zwischen dem Verspannabschnitt (280) und einem Ventilkörper (6) zu verspannen.

13. Der Ventilantrieb (4) gemäß einem der vorigen Ansprüche, wobei in einem Verriegelungszustand des Antriebgehäuses (100) und des Verschlusses (200) eine Mehrzahl von Rasthaken (206a-d) des Verschlusses (200) jeweils mit einem zugeordneten einer Mehrzahl von Aussparungen (106a-d) des Antriebsgehäuses (100) in Eingriff stehen, und wobei zu der Entriegelung des Antriebsgehäuses (100) und des Verschlusses (200) die Mehrzahl von Rasthaken (206a-d) sich durch eine relative Drehbewegung zwischen dem Antriebsgehäuse (100) und dem Verschluss (200) aus den zugeordneten der Mehrzahl von Aussparungen (106a-d) des Antriebsgehäuses (100) herausbewegen.

14. Ein Prozessventil (2), insbesondere ein Membranventil, umfassend:
den Ventilantrieb (4) gemäß einem der vorigen Ansprüche;
einen mit dem Ventilantrieb (4) starr verbundenen Ventilkörper (6).

15. Das Prozessventil (2) gemäß dem Anspruch 14, wobei zwischen dem Ventilantrieb (4) und dem Ventilkörper (6) eine Ventilmembran (8) mit ihrem lateralen Außenbund verspannt ist, und wobei die Ventilmembran (8) zu deren Bewegung mit der Antriebsstange (20) verbunden ist.
